# EUROPÄISCHE PATENTSCHRIFT

(11) **EP 1 029 096 B1**
(45) Veröffentlichungstag und Bekanntmachung des Hinweises auf die Patenterteilung: **27.03.2002**
(21) Anmeldenummer: 98963423.3
(22) Anmeldetag: 09.11.1998
(51) Int. Cl.: C22C 21/00, B32B 15/01

(54) **GLEITLAGERWERKSTOFF**
SLIDING BEARING MATERIAL
MATIERE POUR PALIER LISSE

(30) Priorität: 12.11.1997 DE 19750080
(43) Veröffentlichungstag der Anmeldung: 23.08.2000
(73) Patentinhaber: KS Gleitlager GmbH, 68789 St. Leon-Rot (DE)
(72) Erfinder: SCHUBERT, Werner, D-69168 Wiesloch (DE); STEFFENS, Thomas, D-74906 Bad-Rappenau (DE)
(74) Vertreter: Friz, Oliver
(86) Internationale Anmeldenummer: EP9807123
(87) Internationale Veröffentlichungsnummer: WO9924629

(56) Entgegenhaltungen:
- DE-A- 3 727 591
- DE-A- 3 938 234
- DE-A- 4 004 703
- GB-A- 917 986
- GB-A- 1 073 428
- CHEMICAL ABSTRACTS, vol. 89, no. 14, 2. Oktober 1978 Columbus, Ohio, US; abstract no. 116160, DE GEE, A. W. J.: "Aluminum-based bearing metals" XP002098463 & ALUMINIUM (DUESSELDORF) (1978), 54(4), 261-5 CODEN: ALUMAB;ISSN: 0002-6689,1978,

## Beschreibung

Die Erfindung betrifft einen Gleitlagerverbundwerkstoff mit einer hartmetallischen Stützschicht und einer auf die Stützschicht walzplattierten metallischen Gleitschicht aus einer Aluminiumlegierung mit 10 bis 25 Masse % Zinn und mit Zusätzen von Kupfer und Nickel, die in Gebrauch in unmittelbarem Kontakt zu dem Gleitpartner steht. Die Gleitschicht trägt also keine weitere beispielsweise galvanisch aufgebrachte Laufschicht.

Ein derartiger Gleitlagerwerkstoff ist beispielsweise aus der DE 40 04 703 A1 bekannt. Das einzige Ausführungsbeispiel lehrt eine Aluminiumlegierung mit der Zusammensetzung AlSn10Ni2Mn1Cu0,5, wobei anstelle des Zinnzusatzes auch ein Bleizusatz verwendet werden kann. Bei derartigen als Gleitlagerwerkstoff verwandten Aluminiumlegierungen wird eine "weiche Phase" in Form einer Zinn- oder auch Bleiausscheidung für die Gewährleistung guter Notlaufeigenschaften eines aus dem Gleitlagerwerkstoff hergestellten Lagers benötigt. Harte Schmutzpartikel oder Abrieb werden in dieser weichen Phase aufgenommen oder eingebettet. Die weiche Phase vermag sich auch geometrischen Bedingungen anzupassen. Die weiche Phase aus in Aluminium nicht löslichem Zinn ist in Form blockiger Ausscheidungen in dem matrixbildenden Aluminium aufgenommen.

Um die Festigkeit der Aluminiummatrix zu erhöhen, ist es bekannt, Kupfer zuzugeben. Kupfer bildet mit Aluminium intermetallische Phasen, sog. Hartstoffphasen, wie Al₂Cu und feinverteilte Vorstufen hiervon, die eine Erhöhung der Festigkeit der Aluminiummatrix bewirken, sofern sie in möglichst fein verteilten Ausscheidungen vorliegen (≤ 1 µm). Hierdurch wird die Belastbarkeit und Ermüdungsfestigkeit eines aus der Legierung gefertigten Gleitlagerwerkstoffs erhöht. Eine derartige Aluminiumlegierung AlSn15Cu2 ist unter dem Handelsnamen KS 985.3 durch die Anmelderin bekannt geworden. Diese Legierung besitzt bereits ausgezeichnete tribologische Eigenschaften; sie bedarf aber für Anwendungen unter Extremlastbedingungen, wie zum Beispiel als Pleuellager in modernen Brennkraftmaschinen, der Verbesserung.

Dies wurde bei der aus der DE 40 04 703 A1 bekannten Aluminiumlegierung durch die Zugabe von Mangan und Nickel zu erreichen versucht, wodurch der Anteil der Hartstoffphasen wohl erhöht werden sollte, und zwar nach Angaben dieser Druckschrift im Besonderen in der Umgebung der Zinnausscheidungen, um durch die Affinität des Zinns zu Nickel und zu Mangan eine verbesserte Bindung der Zinnausscheidung in der Aluminiummatrix zu erreichen.

Es besteht auch die Vorstellung, dass sich ein gewisser Anteil von Hartstoffphasen oder -ausscheidungen positiv auf einen guten Verschleißwiderstand auswirkt, indem die an der Oberfläche befindlichen Hartstoffphasen ein Feinschleifen des Gleitpartners, z.B. der Kurbelwelle, bewirken, so dass Rauheitsspitzen des aus Stahl bestehenden Gleitpartners abgetragen werden können. Auch werde durch Hartstoffphasen die Belastbarkeit des Lagerwerkstoffs erhöht.

Die Erhöhung des Anteils intermetallischer Hartstoffphasen bringt aber auch Probleme im Hinblick auf die Ermüdungsfestigkeit und auch im Hinblick auf die Herstellbarkeit mit sich. So treten beim Umformen, insbesondere beim Kaltplattieren der Aluminiumlegierung auf Stahl, was einen Stich von etwa 50 % Umformung erfordert, Risse auf.

Aus der DE 37 27 591 A1 ist ein Mehrschichtgleitlagerwerkstoff bekannt, der eine Zwischenschicht aus AlSn6CuNi zwischen einer Stahlstützschale und einer galvanisch aufgebrachten Gleitschicht einer Dicke von 5 - 50 µm aufweist.

GB-A-917,986 beschreibt einen Gleitlagerverbundwerkstoff bestehend aus einer Stahl-Stützschicht, auf welche eine Schicht aus einer Aluminiumlegierung mit 5-25 % Zinn, 0,5-2,5 % Silizium, 0,5-1,5 % Kupfer und 0,1-1,0 % Nickel, Rest Aluminium mittels Walzen aufplattiert ist.

Der vorliegenden Erfindung liegt die Aufgabe zugrunde, eine Legierung der eingangs beschriebenen Art dahingehend zu verbessern, dass sie eine höhere Belastbarkeit als die bekannte Aluminium-Zinn-Kupfer oder Aluminium-Zinn-Kupfer-Nickel-Legierung und eine bessere Umformbarkeit, insbesondere Plattierbarkeit, aufweist.

Diese Aufgabe wird durch einen Gleitlagerverbundwerkstoff der eingangs beschriebenen Art gelöst, der dadurch gekennzeichnet ist, dass die Aluminiumlegierung der Gleitschicht aus Zinn, Kupfer, Nickel und Rest Aluminium und insgesamt maximal etwa 1 Masse % und je Element maximal 0,2 Masse % Verunreinigungen besteht und dass Kupfer und Nickel jeweils einen Anteil von 0,2 bis 2 Masse % aufweisen und das Verhältnis des masseprozentualen Anteils von Kupfer zum masseprozentualen Anteil von Nickel zwischen 0,6 und 1,5 liegt.

Verunreinigungselemente sind bis maximal 0,2 Masse % je Element zulässig. In der Summe können Verunreinigungen bis zu etwa 1 Masse % enthalten sein, ohne vom Schutzbereich der Erfindung abzuweichen.

Mit der Erfindung wurde vorgeschlagen, in die Aluminiumlegierung Kupfer und Nickel in einem solchen Maße zuzugeben, dass sich Nickel und Kupfer beinhaltende intermetallische Phasen, beispielsweise die intermetallische Phase Al₃(Ni,Cu) bildet. Hieraus folgt, dass Kupfer und Nickel vorzugsweise zu etwa gleichen Anteilen zugegeben werden sollten. Das vorstehend erwähnte Verhältnis der Kupfer- und Nickelanteile liegt demnach vorzugsweise zwischen 0,8 und 1,2.

Es wurde erkannt, dass Nickel innerhalb der Aluminiumlegierung eine ortsfeste und im Unterschied zu ausschließlich Kupfer enthaltenden intermetallischen Aluminid-Phasen wie Al₂Cu, glühstabile intermetallische Phase ausbildet, die gewissermaßen als Kupfer-Senke wirkt. Hierdurch wird verhindert, dass das Kupfer im Zuge der Wärmebehandlung innerhalb der Matrix wandert und eine Vergröberung der Ausscheidungsphasen mit sich bringt (man spricht hier von Ostwald-Reifung). Einer derartige Vergröberung ist unerwünscht, da die groben Ausscheidungen potentielle Ermüdungs- oder Rissbildungsstellen innerhalb der Legierung darstellen, welche die Umformbarkeit verschlechtern und die Belastbarkeit wiederum herabsetzen. Al₂Cu-Ausscheidungen neigen infolge der relativ hohen Löslichkeit des Kupfers im Aluminiummischkristall in besonderm Maße dazu, zu vergröbern.

Mit der erfindungsgemäßen Legierung AlSn12Cu1Ni werden hohe Matrixhärten und eine sehr gute Unformbarkeit erreicht. Das Legierungsmaterial ist auch bei großen Stichabnahmen von mehr als 50 % gut walzbar. Dies wird auf ein Zusammenwirken von Kupfer und Nickel zurückgeführt. Hohe Matrixgehalte an Kupfer führen zu einer hohen Matrixhärte (Mischkristallhärtung). Im Zuge einer Wärmebehandlung besteht an sich die Tendenz zur Bildung grober bzw. vergröbernder Hartphasen z. B. Al₂Cu, die sich auf die Umformbarkeit und Ermüdungsfestigkeit negativ auswirken. Durch die Zugabe von Nickel wird die Ausbildung grober Aluminium-Kupfer-Phasen verhindert oder zumindest deutlich verringert, da bevorzugt Nickel-Kupfer-Aluminid gebildet wird, welches kaum zu Vergröberungserscheinungen neigt. Die Nickel-Kupfer-Aluminide liegen aber im Unterschied zu reinen Kupfer-Aluminiden auch nach einer Wärmebehandlung bei 250 Grad feinverteilt vor. Die Ursache hierfür ist die äußerst geringe Löslichkeit von Nickel im Aluminiummischkristall.

Die wesentliche Wirkung des beanspruchten Nickelgehalts in Abhängigkeit vom Kupfergehalt besteht darin, Kupfer in Form von Nickel-Kupfer-Aluminid zu binden und dadurch die Bildung von Al₂Cu-Ausscheidungen zu unterdrücken bzw. zu reduzieren. Diese Al₂Cu-Ausscheidungen wirken sich besonders schädlich auf die Umformbarkeit aus, weil sie im Gegensatz zu den thermisch stabilen Nickel-Kupfer-Aluminiden bei der Wärmebehandlung vergröbern und dadurch potentielle Ausgangspunkte für Risse darstellen. Daneben liegt ein Teil des Kupfers in der gewünschten feinverteilten Form in der Matrix vor.

## Patentansprüche

1. Gleitlagerverbundwerkstoff mit einer hartmetallischen Stützschicht und einer auf die Stützschicht walzplattierten metallischen Gleitschicht aus einer Aluminiumlegierung mit 10 bis 25 Masse % Zinn und mit Zusätzen von Kupfer und Nickel, die in Gebrauch in unmittelbarem Kontakt zu dem Gleitpartner steht, **dadurch gekennzeichnet, dass** die Aluminiumlegierung aus Zinn, Kupfer, Nickel und Rest Aluminium und insgesamt maximal etwa 1 Masse % und je Element maximal 0,2 Masse % Verunreinigungen besteht und dass Kupfer und Nickel jeweils einen Anteil von 0,2 bis 2 Masse % aufweisen und das Verhältnis des masseprozentualen Anteils von Kupfer zum masseprozentualen Anteil von Nickel zwischen 0,6 und 1,5 liegt.

2. Gleitlagerverbundwerkstoff nach Anspruch 1, **dadurch gekennzeichnet, dass** das Verhältnis des masseprozentualen Anteils von Kupfer zum masseprozentualen Anteil von Nickel zwischen 0,8 und 1,2 liegt.

3. Gleitlagerverbundwerkstoff nach Anspruch 1, 2 oder 3, **gekennzeichnet durch** die intermetallische Phase Al₃(Ni,Cu) bildende Hartstoffausscheidungen.

4. Gleitlagerverbundwerkstoff nach einem der vorstehenden Ansprüche, **dadurch gekennzeichnet, dass** der jeweilige Anteil von Kupfer und Nickel 0,7 -1,3 Masse % beträgt.

5. Gleitlagerverbundwerkstoff nach einem oder mehreren der vorstehenden Ansprüche, **dadurch gekennzeichnet, dass** der Anteil an Zinn 10 bis 20 Masse-%, insbesondere 10 bis 15 Masse-%, beträgt.

6. Gleitlagerverbundwerkstoff nach einem oder mehreren der vorstehenden Ansprüche, **dadurch gekennzeichnet, dass** die Gleitschicht eine Dicke von wenigstens 0,2mm aufweist.

7. Gleitlagerverbundwerkstoff nach Anspruch 6, **dadurch gekennzeichnet, dass** die Gleitschicht eine Dicke von 0,2 mm bis 0,6 mm und die Stützschicht eine Dicke von 0,3 mm bis 0,6 mm aufweist.

## Claims

1. Sliding bearing composite material with a hard metal substrate and a metal sliding layer made of an aluminium alloy with 10 to 25% by mass tin and with additions of copper and nickel, which sliding layer is roll-bonded onto the substrate and, in use, is in direct contact with the associated sliding member, **characterised in that** the aluminium alloy consists of tin, copper, nickel with the remainder being aluminium and a total of approximately 1% by mass maximum and 0.2% by mass maximum per element of impurities, and **in that** the copper and nickel content is 0.2 to 2% by mass respectively and the ratio of the percentage by mass of copper to the percentage by mass of nickel is between 0.6 and 1.5.

2. Sliding bearing composite material according to claim 1, **characterised in that** the ratio of the percentage by mass of copper to the percentage by mass of nickel is between 0.8 and 1.2.

3. Sliding bearing composite material according to claim 1, 2 or 3, **characterised by** hard material deposits which form the intermetallic phase Al₃(Ni,Cu).

4. Sliding bearing composite material according to any of the preceding claims, **characterised in that** the copper and nickel content is 0.7 to 1.3% by mass respectively.

5. Sliding bearing composite material according to any one or more of the preceding claims, **characterised in that** the tin content is 10 to 20% by mass, in particular 10 to 15% by mass.

6. Sliding bearing composite material according to any one or more of the preceding claims, **characterised in that** the sliding layer is at least 0.2 mm thick.

7. Sliding bearing composite material according to claim 6, **characterised in that** the sliding layer has a thickness of 0.2 mm to 0.6 mm and the substrate has a thickness of 0.3 mm to 0.6 mm.

## Revendications

1. Matériau composite pour palier lisse comportant une couche d'appui en métal dur et une couche de glissement métallique plaquée par laminage sur ladite couche d'appui et constituée d'un alliage d'aluminium contenant 10 à 25 % en masse d'étain ainsi que du cuivre et du nickel en tant qu'éléments d'addition, ladite couche de glissement venant, à l'usage, en contact direct avec l'élément glissant antagoniste, **caractérisé en ce que** l'alliage d'aluminium se compose d'étain, de cuivre, de nickel et, pour le reste, d'aluminium et d'impuretés à raison d'au maximum 1% environ en masse au total et d'au maximum 0,2 % en masse par élément, **en ce que** le cuivre et le nickel sont respectivement présents à hauteur de 0,2 à 2 % en masse et **en ce que** le rapport des pourcentages en masse du cuivre sur le nickel est compris entre 0,6 et 1,5.

2. Matériau composite pour palier lisse selon la revendication 1, **caractérisé en ce que** le rapport des pourcentages en masse du cuivre sur le nickel est compris entre 0,8 et 1,2.

3. Matériau composite pour palier lisse selon la revendication 1, 2 ou 3, **caractérisé par** les dépôts de substance dure formant la phase intermétallique Al₃(Ni, Cu).

4. Matériau composite pour palier lisse selon l'une des revendications précédentes, **caractérisé en ce que** les pourcentages en masse du cuivre et du nickel sont respectivement compris entre 0,7 et 1,3 %.

5. Matériau composite pour palier lisse selon l'une au moins des revendications précédentes, **caractérisé en ce que** la teneur en étain est comprise entre 10 et 20 % en masse, et en particulier entre 10 et 15 % en masse.

6. Matériau composite pour palier lisse selon l'une au moins des revendications précédentes, **caractérisé en ce que** l'épaisseur de la couche de glissement est supérieure ou égale à 0,2 mm.

7. Matériau composite pour palier lisse selon la revendication 6, **caractérisé en ce que** l'épaisseur de la couche de glissement est comprise entre 0,2 mm et 0,6 mm tandis que l'épaisseur de la couche d'appui est comprise entre 0,3 mm et 0,6 mm.
